Europäisches Patentamt

European Patent Office

Office européen des brevets

(11) Publication number: **0 492 516 A2**

# EUROPEAN PATENT APPLICATION

(21) Application number: **91121977.2**

(22) Date of filing: **20.12.91**

(51) Int. Cl.⁵: **C08K 7/02**, C08L 23/00, C08J 5/04, B27N 3/12

(30) Priority: **20.12.90 IT 2245390**

(43) Date of publication of application:
**01.07.92 Bulletin 92/27**

(84) Designated Contracting States:
**DE ES FR GB IT NL SE**

(71) Applicant: **Himont Incorporated**
**2801 Centerville Road**
**New Castle County Delaware(US)**

(72) Inventor: **Braca, Giancarlo**
**13, via Renato Donatelli**
**I-05100 Terni(IT)**
Inventor: **Branchesi, Millo**
**32, Strada di San Clemente**
**I-05100 Terni(IT)**
Inventor: **Guidetti, Gianpietro**
**5, via Dosso Dossi**
**I-44100 Ferrara(IT)**
Inventor: **Letterucci, Sergio**
**43, via del Capriolo**
**I-5100 Terni(IT)**

(74) Representative: **Zumstein, Fritz, Dr. et al**
**Dr. F. Zumstein Dipl.-Ing. F. Klingseisen**
**Bräuhausstrasse 4**
**W-8000 München 2(DE)**

(54) Mats suitable for the preparation of reinforced polyolefin sheets and process for their preparation.

(57) Sheets and manufactured articles with polyolefin matrixes, comprises reinforcement fibers, are produced by thermoforming mats that comprise polyolefin fibers and bunches of reinforcement fibers of appropriate length. The aforementioned mats are prepared with mixing technique which do not entail opening the bunches of reinforcement fibers.

EP 0 492 516 A2

This invention relates to mats comprising polyolefin fibers and reinforcement fibers, the process for the preparation of the mats, and the sheets and thermoformed manufactured articles produced by same.

Various products and processes in the field of articles made of polyolefin and reinforcement fibers are known in the art. According to British Patent 1,200,342 (1967) and French patent 1,603,824 (1967) of I.C.I., thermoplastic reinforced manufactured articles are produced by preparing mixtures of fibers made from polyethylene, polypropylene, vinyl chloride polymers and copolymers, acrylonitrile polymers and copolymers, polyesters, polyamides, glass, asbestos, and the like. The mixtures are converted into mats by using conventional methods, such as carding or paper wet processes, and needle punching, and they are subsequently subjected to heating/compression, in a press, calander or other commonly used devices.

Published European patent application EP-A-O 133,199 (1983) to U.O.P. describes materials that are suitable for conversion into sheets or reinforced shaped articles, which are produced by placing between mats of thermoplastic fibers, reinforcement materials consisting of glass fibers, asbestos fibers, mineral fibers, carbon fibers, metallic fibers, together with powder materials consisting of calcium carbonate, carbon black, maleic anhydride or acrylic acid, with peroxides.

Another process for the preparation of reinforced manufactured articles is described in British patent 2,105,247 (1982) to Courtaulds, according to which reinforced thermoplastic manufactured articles are produced by thermoforming reinforcement fibers made of glass fibers, mineral fibers, ceramic fibers, metallic fibers and aromatic polyamide fibers, which are first wrapped by winding them with thermoplastic polymer fibers.

Both the aforementioned I.C.I. patents emphasize the fact that finished products with better physical and mechanical properties are produced by covering the reinforcement fibers with thermoplastic polymers before mixing them with fibers made of thermoplastic polymers.

In the aforementioned U.O.P. patent, the coating materials for the reinforcement fibers (maleic anhydride and acrylic acid, together with peroxides), by improving the adhesion matrix/reinforcement, improve the physical and mechanical properties of manufactured article.

Reinforced thermoplastic manufactured articles are also produced by thermoforming mixtures consisting of glass fibers, coated with adhesive agents, and olefin polymers functionalized by grafting of unsaturated acids, which are used in powdered or granular form. Likewise, according to Japanese Kokai Tokyo Koho JP-78-102,949/1977 to Sumitomo Chem., reinforced plastic materials are produced by thermoforming mixtures of polypropylene reinforced with glass fibers and of polypropylene functionalized by grafting acrylic acid; the glass fiber which are used have been previously coated with epoxy resins and gamma-aminopropyltrimethoxysilane.

According to Japanese Kokai Tokyo JP-78-124,558/1977 to Idemitsu Petrochemicals reinforced plastic materials are obtained by thermoforming mixtures of polypropylene functionalized by grafting acrylic acid and of glass fibers coated with silanes. According to Japanese Kokai Tokyo Jp-78-130,743/1977 to Sumitomo Chem. reinforced plastic materials are obtained from crystalline polyolefins, glass fibers and propylene/ethylene copolymers functionalized by grafting of unsaturated acids.

Polyolefin-reinforced sheets and manufactured articles are therefore produced basically by thermoforming:

- needle punched mats produced from mixtures of polyolefin fibers with reinforcement fibers, the latter being coated with thermoplastic polymers or with maleic anhydride or acrylic acid together with peroxides;
- mixtures of powdered or granulated polyolefins with reinforcement fibers, coated with adhesive agents (alkoxysilanes), in the presence of polyolefins functionalized by grafting of unsaturated acids.

A drawback with known processes which employ mixtures of fibers is the difficulty of producing mats in which the reinforcement fibers, after the mixing and needle punching processes, retain a length which is capable of providing manufactured articles with high physical and mechanical properties.

In known processes based on the use of mixtures of reinforcement fibers with olefin polymers in the form of powder or granules, which are functionalized by grafting of unsaturated acids, drawbacks are encountered during the processing, due to the powerful adhesion of functionalized polyolefins to the metals in the equipment used, particularly during thermoforming.

The sheets produced by thermoforming fiber mats, on the other hand, present physical and mechanical properties which are superior to those of sheets produced by mixing reinforcement fibers with powdered or granular polyolefins. This invention provides a process that makes it possible to produce mats made of polyolefin fibers and reinforcement fibers, in which the reinforcement fibers retain the appropriate length, even after mixing and needle punching.

This is particularly interesting, given the exellent physical and mechanical properties which can be obtained in the sheets which are produced form the mats and the fact that the mats themselves are easy to process.

Furthermore, in another embodiment the reinforcement fibers are used in the form of bunches, rather than separate fibers, several significant physical and mechanical properties of the sheets produced from the aforementioned mats, such as shock resistance and heat distortion temperature, are further improved.

According to this invention the mats comprise (by weight):

a) from 30% to 80%, preferably from 40% to 80%, most preferably from 50% to 80% fibers made of at least one olefin polymer;

b) from 20% to 70%, preferably from 20% to 60%, most preferably from 20% to 50% bunches of fibers selected from among inorganic reinforcement fibers and fibers produced from thermoplastic polymers which have a melting or softening point which is higher than that of fibers under (a), said bunches (b) having a length of from 5 to 220 mm, preferably from 20 to 150 mm.

The diameter of the bunches and of individual fibers is not particularly critical, but it should appropriately be in the range of from 0.10 mm to 0.60 mm and between 10 $\mu$m and 20 $\mu$m, respectively.

In instances in which the mats are used in preparing manufactured articles with particularly complex form, for example by thermoforming the sheets produced from them, it may be appropriate to use reinforcement fiber bunches having different lengths.

The use of reinforcement fibers in the form of bunches of the aforementioned length, rather than in the form of separate fibers, considerably also improves the processability during the thermoforming phase of the sheets produced from the aforementioned mats. In fact, the separate fibers tend to form a three-dimensional netting inside the sheet, thereby slowing the running of the mass of reinforced polyolefin material, with a tendency to separate the polyolefin matrix from the reinforcement fibers. This phenomenon is particularly evident when it is desired that manufactured articles having complex form be produced by thermoforming.

The physical and mechanical properties of the manufactured articles produced are therefore uneven, due to a non-homogenous distribution of the reinforcement fibers.

Finally, the very fact of having a three-dimensional netting of reinforcement fibers entails the presence of fibers which are perpendicular to the extension plane of the sheet, which fibers, due to their relative length, are bent during the sheet formation phase. Such bent fibers tend to stretch out when the sheets are heated before thermoforming, leading to an undesirable bulging in the sheets themselves and to a degradation in their surface appearance. In contrast, the mats in this invention and the sheets produced from them have a reduced tendency to form a three-dimensional netting of reinforcement fibers.

Since the reinforcement fiber (b) are relatively long in relation to the usual thickness of the mats and sheets, the aforementioned bunches are prevailingly oriented in directions which are parallel to the plane of the mats and sheets, i.e. to their plane of extension.

This orientation is also promoted by the mixing technique based on the fall of the reinforcement fiber bunches and of the polyolefin fibers, which shall be described hereinafter.

The process for the preparation of the mats comprises the following operational steps:

1. preparation of a mixture which comprises the fibers (a) and fiber bunches (b) in the aforementioned weight proportions;

2. preparation of a mat from the mixture produced, by means of mixing devices which do not permit the fiber bunches to be opened (b);

3. needle punching of the mat.

Sheets and manufactured articles can be prepared from the aforementioned mat by means of thermoforming.

Examples of mixing devices which do not permit the fiber bunches (b) to be opened are textile mixing devices which operate without carding.

Employing the aforementioned process results in mats in which the length of the reinforcement fiber bunches (b) is not substantailly reduced. It is therefore sufficient to use bunches of the desired length.

In greater detail, preparation of the mats for this invention may be carried out by using a horizontal conveyor belt onto which the fibers (a) and the fiber bunches (b) are deposited by falling.

The mixtures produced in this manner are brought to a mixing device which produces a mat, by depositing them by falling on a horixontal conveyor belt. The mat is subsequently needle punched, by subjecting it to 30-70, preferably 40-50 strokes per centimeter of mat.

The falling deposition technique also leads to a preferred orientation of the reinforcement fiber bunches (b) in a direction which is perpendicular to the direction in which the mat is moving on the horizontal conveyor belt. This orientation is obviously found in the sheets which are produced from the aforementioned mat and leads to isotropy of certain mechanical properties, as shall be shown in the examples.

In instances in which it is desired that such isotropy be avoided, it is sufficient to modify the mixing device with an additional unit for the agitation of the mass of fibers (a) and the bunches of fibers (b). Said device may be for example either mechanical or pneumatic and in the textile type mixers, it can be inserted at the output in the feeding unit which deposites the mat on the horizontal conveyor belt.

Examples of fibers (a) are fibers made up of polyethylene, polypropylene, propylene/ethylene crystalline copolymers having a prevailing content of propylene, or mixtures thereof. According to this invention, the fibers (a) are used in the form of a continuous thread, staple, tow, nonwoven mat and can contain additives.

In particular, it is appropriate for the polyolefins which make up the fibers (a) to be stabilized against oxidation phenomena, for example by adding an appropriate quantity of one or more phenolic antioxidants, preferably in combination with thioesters, such as laurylthiodipropionate, and antiacids, such as synthetic hydrotalcite (SHT).

Examples of phenolic antioxidants are: tris(4-t-butyl-3-hydroxy-2,6-dimethylbenzyl)-s-triazine-2-4-6-(1H, 3H, 5H)trione; calcium bi-[monoethyl(3,5-di-ter-butyl-4-hydroxybenzyl)-phosphonate]; 1,3,5-tris(3,5-di-ter-butyl-4-hydroxybenzyl)-s-triazine-2,4,6(1H,3H,5H)trione; 1,3,5-trimethyl-2,4,6-tris(3,5-di-ter-butyl-4-hydroxybenzyl)benzene; pentaerythrityl-tetra[3-(3,5-di-ter-butyl-4-hydroxyphenyl)propionate].

The preferred range of melt index values for the aforementioned poyolefins varies from 10 to 70 g/10 minutes. The molecular weight distribution is preferably restricted, with values of Mw/Mn<4.

Examples of fibers which make up the bunches (b) are glass fibers, metallic fibers, carbon fibers, aromatic polyamide fibers and aromatic polyester fibers. Glass fibers are preferred.

To increase the adhesion of the fiber bunches (b) to the polyolefin matrix of the reinforced sheets, while avoiding the adhesion of the aforementioned polyolefin matrix to the molds used in the preparation and production of the sheets, it is appropriate for one or more silanic compatibilizers to be added to the fiber bunches (b).

The aforementioned silanic compatibilizers are preferably employed in quantities of from 0.01% to 2% in relation to the weight of the fiber bunches (b). Examples of silanic compatibilizers are compounds with the general formula

$$R\text{-}Si(OR^{I})(OR^{II})(OR^{III}) \qquad (I)$$

in which R is a saturated or unsaturated hydrocarbon radical which contains 1 to 18 carbon atoms $R^{I}$, $R^{II}$, $R^{III}$, which are the same or different with respect to each other, are linear or branched, alkyls, which contain 1 to 30 carbon atoms and optionally one or more heteroatoms, preferably either sulphur or phosphorous.

Examples of compounds represented by general formula (I) are vinyltriethoxysilane, allyltrimethoxysilane, isopropyltrimethoxysilane and isopropyltriethoxysilane. In addition to silanic compatibilizers, generators of free radicals, such as azo-compounds and organic peroxides, may be used.

The mats for this invention constitute a semifinished product which can be marketed as such, or converted into sheets and various manufactured articles by means of thermoforming, preferably under pressure in a press, calander or similar devices.

The temperature for thermoforming must be at least equal to the softening or melting point for the fibers (a) and less than the softening or melting point for the fiber bunches (b), particularly when the latter are made of polymer materials, such as aromatic polyamides and polyesters.

The manufactured articles which are an object of this invention, which consist of thermoformed products, are used in the manufacturing of machine and equipment parts, particularly in the automobile and aeronautics industries, in the manufacturing of particularly durable packagings, and in similar applications.

The needle punched mats, plain or impregnated with tars, bitumens, polymer materials and the like, may be used in the manufacturing of waterproof, phone- and heat-absorbent sheathings.

Various changes or variations may be carried out in implementing this invention, without departing from the spirit and the purposes of the invention.

The following are several examples which illustrate the invention, without, nevertheless, limiting its scope.

Example 1

This example uses glass reinforcement fibers in the form of trimmed bunches, with a filament/diameter = 13 μm, a total count of 600 tex, a length = 50 mm, and coated with a quantity of vinyltriethoxisilane which is 1% by weight.

The bunches are mixed, in a quantity which is 30% by weight, with polypropylene fibers, by fall deposition on a conveyor belt.

The polypropylene fibers in the form of flock are produced by spinning and drawing polypropylene and have a filament/count = 5.6 dtex, strength = 3.8 g/dtex, maximum elongation = 75%. The polypropylene used for the fibers has a residue from extraction in boiling n-heptane = 98.3% by weight, ash 56 p.p.m., melt index (ASTM D 1238) = 18 g/10 minutes. The mixtures produced in this manner are mixed to an even consistency in a textile type mixer, which includes vertical conveyor belts and rollers rotating in a direction opposite to that of the aforementioned belts, which are both equipped with bolts which are placed perpendicular to the surface. At the output of the textile mixer, the mixtures pass through an agitation unit which creates a random orientation of the fibers, and are deposited by fall onto a horizontal conveyor belt.

This process produces a mat which is needle punched with 40 needle punches per centimeter.

The needle punched mat, which has a weight of 1100 $g/m^2$, is converted into sheets by being pressed in a press at a temperature of 230°C and a pressure of 50 atmospheres.

The sheets which are produced have the following characteristics:
- thickness (mm): 3.7
- reinforced fiber content (by weight): 30%
- specific weight: 1.11 $g/cm^3$
- breaking strength (MPa) (ASTM standard D-882): 75
- maximum elongation (%) (ASTM standard D-882): 4
- bending strength (MPa) (ASTM standard D-790): 120
- flexural modulus (MPa) (ASTM standard D-790): 4000
- impact strength (Izod) (J/m) (ASTM standard D-256 at 23°C): 400
- distortion point under heat (°C) (ASTM standard D-648):157.

The sheets are also subjected to processability tests by heating them in an infrared oven at a temperature of approximately 220°C for 5 minutes. During this phase, the thickness of the sheets changes from the original 3.7 mm to approximately 5 mm.

The heated strips are molded, producing flat manufactured articles having a thickness of 3 mm, which have ribbing with a width of 2 mm and a height of 5 mm.

By cutting the aforementioned manufactured articles along the ribbings, it is possible to obtain samples on which a test of impact strength is performed to check, by means of the stiffening effect, the omogeneous filling of the ribbings with glass fibers. This is performed as per the Izod test in accordance with ASTM D-256 at 23°C, using the aforementioned samples and measuring the breaking energy. A value of 1.6 J is obtained.

Comparative Example

The process is the same as in Example 1, with the exception that the bunches of glass fibers are broken open by carding before being treated in the textile mixer.

The sheets which are produced present the following characteristics:
- thickness (mm): 3.7
- reinforced fiber content (by weight): 30%
- specific weight: 1.12 $g/cm^3$
- breaking strength (MPa): 80
- maximum elongation (%): 3.5
- bending strength (MPa): 120
- flexural modulus (MPa): 5000
- impact strength (Izod) (J/m): 250
- distortion point under heat (°C): 153

In the 220°C heating test the thickness of the sheets varies from the original 3.7 mm to about 15 mm. In the impact strength test on the ribbings, a value of 0.6 J is obtained.

EXAMPLE 2

The process is the same as in Example 1, with the exception that polypropylene fibers which have a melt index of 60 g/10 min are used, the extraction residue in boiling n-heptane = 98.3% by weight, ash content = 5 ppm.

The sheets which are produced present the following characteristics:
- thickness (mm): 3.7
- reinforced fiber content (by weight): 30%
- specific weight: 1.11 $g/cm^3$
- breaking strength (MPa): 75
- maximum elongation (%): 3.5
- bending strength (MPa): 120
- flexural modulus (MPa): 4200
- impact strength (Izod) (J/m): 400
- distortion point under heat (°C): 156

In the 220°C heating test, the thickness of the lastre varies from the original 3.7 mm to approximately 5 mm.

In the impact strength test on the ribbings a value of 1.8 J is obtained.

EXAMPLE 3

The process is the same as in Example 2, with the exception that bunches of glass fibers which have a length of 110 mm are used.

The sheets which are produced present the following characteristics:
- thickness (mm): 3.7
- reinforced fiber content (by weight): 30%
- specific weight: 1.11 $g/cm^3$
- breaking strength (MPa): 78
- maximum elongation (%): 3.5
- bending strength (MPa): 125
- flexural modulus (MPa): 4600
- impact strength (Izod) (J/m): 650
- distortion point under heat (°C): 159

In the 220°C heating test the thickness of the sheets varies from the original 3.7 mm to approximately 5 mm.

In the impact strength test on the ribbings a value of 1.6 J is obtained.

EXAMPLE 4

The process is the same as in Example 3, with the exception that a quantity of bunches of glass fibers which is 40% by weight is used and the agitation unit at the output of the textile mixer is eliminated.

The sheets which are produced present the following characteristics:
- thickness (mm): 3.7
- reinforced fiber content (by weight): 40%
- specific weight: 1.22 g/cm$^3$
- breaking strength[1](MPa): 80
- breaking strength[2](MPa): 135
- maximum elongation[1](%): 3
- maximum elongation[2](%): 4
- bending strength[1](MPa): 120
- bending strength[2](MPa): 140
- flexural modulus[1](MPa): 4350
- flexural modulus[2](MPa): 6200
- impact strength[1](Izod) (J/m): 550
- impact strength[2](Izod) (J/m): 950
- distortion point under heat (°C): 160

In the 220°C heating test the thickness of the sheets varies from the original 3.7 mm to approximately 5 mm.

In the impact strength test on the ribbings a value of 2.05 is obtained.

**Claims**

1. A mat comprising of (by weight):
   (a) from 30% to 80% fibres of at least one olefin polymer;
   (b) from 20% to 70% fiber bunches chosen from inorganic reinforcement fibers and fibers produced from thermoplastic polymers which have a melting or softening point which is higher than for fibers under (a), said bunches (b) having a length of from 5 to 220 mm.

2. The mat of claim 1 in which the fiber bunches (b) are composed of glass fibers.

3. The mat of claim 1 in which the fiber bunches (b) are prevailingly oriented in a direction parallel to the plane of the mats.

4. The mat of claim 1 in which a quantity of 0.01% to 2% by weight of one or more silane compatibilizers is added to the fiber bunches (b).

5. The mat of claim 4 in which the silane compatibilizers are selected from compounds having the general formula:

   $$R\text{-}Si(OR^I)(OR^{II})(OR^{III}) \qquad (I)$$

   in which R is a saturated or unsaturated hydrocarbon radical which contains 1 to 18 carbon atoms, $R^I$, $R^{II}$, $R^{III}$, which are the same or different with respect to each other, are linear or or branched alkyls, which contain 1 to 30 carbon atoms and optionally one or more heteroatoms.

6. The mat of claim 1 which the olefin polymer or the olefin polymers are selected from the group consisting of polyethylene, polypropylene, propylene/ethylene crystalline copolymers.

7. A process for the preparation of the mats of claim 1, which comprises the following operational steps:
   1) preparation of a mixture which comprises (a) fibers of at least one olefin polymer in a quantity of from 30 to 80% by weight, and (b) fiber bunches selected from the group consisting of inorganic reinforcement fibers and fibers produced from thermoplastic polymers, which have a melting or softening point which is higher than that for fibers under (a), in a quantity which is 20 to 70% by weight, said bunches (b) having a length of from 5 to 220 mm.
   2) preparation of a mat from the mixture produced using mixing devices which do not permit the fiber bunches (b) to be opened;
   3) stitching of the mat.

8. The process of claim 7, in which the mat is subjected in step (3) to 40-50 strokes per centimeter.

Notes: 1. Measure carried out on the sheet in the longitudinal direction (parallel to the running direction of the mat on the horizontal conveyor belt).

2. Measure carried out on the sheet in the direction of the width (perpendicular to the longitudinal direction).

9. Thermoformed sheets and manufactured articles produced from the mats of claim 1.